# EUROPEAN PATENT APPLICATION

(11) **EP 4 656 327 A1**
(43) Date of publication of application: **03.12.2025**
(21) Application number: 25179916.9
(22) Date of filing: 30.05.2025
(51) Int. Cl.: B23K 35/02, B23K 35/40

(54) **CONSUMABLE ELECTRODE FOR SHIELDED METAL ARC WELDING**

(30) Priority: 31.05.2024 US 202418680335
(71) Applicant: Lincoln Global, Inc., Cleveland, OH 44117 (US)
(72) Inventor: DEPIETRO, Samantha, Thompson, 44086 (US); ZALOKAR, Joseph Kenneth, Mentor, 44060 (US); MORALES, Jeffrey, Lorain, 44052 (US); PIKE, James, Mentor, 44060 (US); ARNOULT, Olivier, Shaker Heights, 44122 (US); HANSEN, Steven, Richmond Heights, 44143 (US); SATIN, Morris, Shaker Heights, 44120 (US); VOORHEES, Gregory, Shaker Heights, 44120 (US); LESLIE, Eric, Chardon, 44024 (US)
(74) Representative: Hoyng Rokh Monegier B.V.

(57) **Abstract**

The disclosed technology generally relates to welding technologies and more particularly to electrodes for shielded metal arc welding. In one aspect the electrode includes an electrode core having an electrode core tip and a coating formed around the electrode core. The electrode core tip comprises an end surface, a tapered surface, and one or more surface features formed on the tapered surface. The surface area of the electrode core tip is greater than the surface area of a reference electrode core tip that is the same as the electrode core tip except for the presence of the one or more surface features. The coating is adhered to the tapered surface and at least partially covers each of the one or more surface features.

## Description

### BACKGROUND

### Field

The disclosed technology generally relates to welding technologies and more particularly to consumable electrodes for arc welding, e.g., shielded metal arc welding.

### Description of the Related Art

Various welding technologies utilize welding wires that serve as a source of metal. For example, in metal arc welding, an electric arc is created when a voltage is applied between a consumable weld electrode wire, which serves as one electrode that advances towards a workpiece, and the workpiece, which serves as another electrode. The arc melts a tip of the metal wire, thereby producing droplets of the molten metal wire that deposit onto the workpiece to form a weldment or weld bead.

Technological and economic demands on welding technologies continue to grow in complexity. For example, the need for higher bead quality in both appearance and in mechanical properties continues to grow, including high yield strength, ductility, and fracture toughness. Simultaneously, the higher bead quality is often demanded while maintaining economic feasibility. Some welding technologies aim to address these competing demands by improving the consumables, e.g. by improving the physical designs and/or compositions of the electrode wires.

Shielded metal arc welding (SMAW), which may also be referred to as manual metal arc welding, flux shielded welding, and stick welding, is a versatile and simple technique that is widely used in commercial welding operations.

### SUMMARY

In an aspect, a welding electrode comprises an electrode core and a coating formed around the electrode core. The electrode core has an electrode core tip that has an end surface, a tapered surface, and a groove formed in the tapered surface that extends around the electrode core tip. The coating is adhered to the tapered surface and at least partially fills the groove.

In another aspect, a welding electrode comprises an electrode core and a coating formed around the electrode core. The electrode core has an electrode tip that has an end surface, a tapered surface, and a protrusion formed on the tapered surface, where the protrusion extends away from the tapered surface. The coating is adhered to the tapered surface and at least partially covers the protrusion.

In another aspect, a welding electrode comprises an electrode core and a coating formed around the electrode core. The electrode core has an electrode core tip that has an end surface, a tapered surface, and one or more surface features formed on the tapered surface. The surface area of the electrode core tip is greater than the surface area of a reference electrode core tip that is the same as the electrode core tip except for the presence of the one or more surface features. The coating is adhered to the tapered surface and at least partially covers each of the one or more surface features.

In another aspect, a welding electrode comprises an electrode core and a coating formed around the electrode core. The electrode core has an electrode core tip that has an end surface, a first tier, and a second tier. The first tier is closer to the end surface than the second tier and the first tier is smaller than the second tier. The coating is adhered to and at least partially covers the first and second tiers.

### BRIEF DESCRIPTION OF THE DRAWINGS

Figure 1A schematically illustrates a shielded metal arc welding (SMAW) system according to embodiments of the present technology.
Figure 1B illustrates a perspective view of a perspective view of a consumable welding electrode for SMAW.
Figure 2A illustrates a perspective view of a conventional electrode core for SMAW.
Figure 2B illustrates an isometric end view of an electrode having the electrode core of Figure 2A.
Figure 3A illustrates a perspective view of a conventional electrode core for SMAW that includes a tapered electrode core tip.
Figure 3B illustrates an isometric end view of an electrode having the electrode core of Figure 3A.
Figure 4A illustrates a perspective view of an electrode core for SMAW that has groove formed in the surface of the electrode core tip.
Figure 4B illustrates an isometric side view of the electrode core of Figure 4A.
Figure 4C illustrates a cross-sectional view of an electrode having the electrode core of Figure 4A.
Figure 5A illustrates a perspective view of an electrode core for SMAW that has multiple grooves formed in the surface of the electrode core tip.
Figure 5B illustrates an isometric side view of the electrode core of Figure 5A.
Figure 6A illustrates a perspective view of an electrode core for SMAW that has an electrode core tip with a roughened surface.
Figure 6B illustrates an isometric side view of the electrode core of Figure 6A.
Figure 7A illustrates a perspective view of an electrode core for SMAW that has multiple disc-shaped protrusions formed around the electrode core tip.
Figure 7B illustrates an isometric side view of the electrode core of Figure 7A.
Figure 8A illustrates a perspective view of an electrode core for SMAW that has electrode core tip with a stepped surface.
Figure 8B illustrates an isometric side view of the electrode core of Figure 8A.

### DETAILED DESCRIPTION

In processes using a consumable electrode, the electrode or the wire melts to provide an additive metal that fills a gap to form a weld joint that joins two metal workpieces. The welding processes using consumable electrodes include shielded metal arc welding (SMAW), gas metal arc welding (GMAW) or metal inert gas (MIG) welding, flux-cored arc welding (FCAW), metal-cored arc welding (MCAW), and submerged arc welding (SAW), among others.

### Shielded Metal Arc Welding

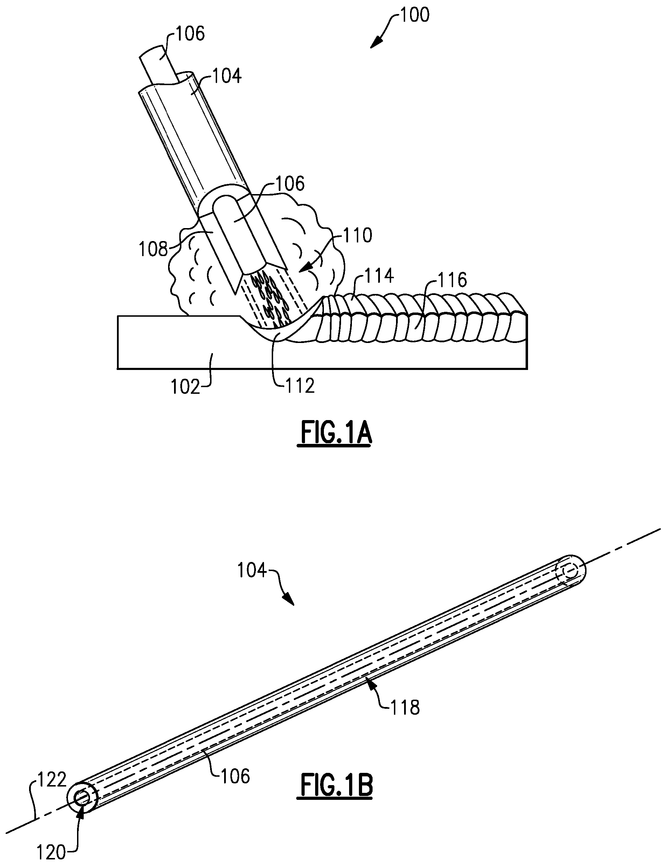

Figure 1A schematically illustrates a shielded metal arc welding (SMAW) system 100 for depositing filler or weld metal onto a workpiece 102. The system 100 includes a consumable welding electrode 104 having an electrode core 106 and a coating 108. The electrode core 106 generally comprises a metal or alloy while the coating 108 comprises flux, which is a granular fusible material. During a SMAW operation, an electric current from a welding power supply is applied to the electrode core 106. When the electrode 104 is positioned close to the workpiece 102, the provided current arcs to the workpiece 102. The arc 110 heats the workpiece 102 and the electrode 104, causing the metallic electrode core 106 and workpiece 102 to melt, thereby forming a pool 112 of molten metal on the workpiece 102. The heat given off by the arc 110 also causes the flux material in the coating 108 to disintegrate and vaporize, thereby forming a shielding gas that protects the weld area from atmospheric gases during the welding process. Some of the flux material can also mix with the molten metal in the weld pool 112 to form a molten slag. The molten slag, which is typically less dense than the weld metal, floats to the surface of the weld metal and solidifies to form a layer of slag 114 over the cooling weld metal 116. The solidified slag layer 114 can protect the weld metal 116 from contamination as the weld metal 116 cools.

Figure 1B depicts a perspective view of the consumable welding electrode 104. The electrode core 106 has an electrode core body 118 and an electrode core tip 120 that extend along a centerline axis 122 of the electrode 104. The electrode core body 118 typically has a cylindrical shape and the electrode 104 typically has a length of 12 to 24 inches. The coating 108 is formed around the electrode core 106 using an extrusion process whereby the electrode core 106 is pushed through an extruder and the coating material 108 coats the surfaces of the electrode core body 118 and the electrode core tip 120.

When initiating a weld using electrode 104, electrode 104 is positioned such that the electrode core tip 120 is adjacent to the workpiece 102. Once the arc is established and welding begins, the electrode core tip 120 (and the portion of the coating 108 formed over the electrode core tip 120) melts away and welding proceeds using the rest of the electrode 104 (e.g., the electrode core body 118 and the rest of the coating 108). The electrode core tip 120 is typically less than one inch long and melts away within the first few seconds of welding. However, it can be difficult to establish an arc with some electrodes and weld metal formed during the arc-start process can be poor quality (e.g., have high porosity). Accordingly, there is a desire and need to improve the arc-start characteristics of the SMAW electrodes. For example, there is a need for SMAW electrodes that can have high current density and a high coating-to-metal ratio at the electrode core tip, which can reduce weld metal porosity and make it easier to establish an arc at the start of welding, while also having high coating durability at the tip and that can be easily manufactured.

### Cylindrical and Tapered Electrode Core Tip Designs for SMAW

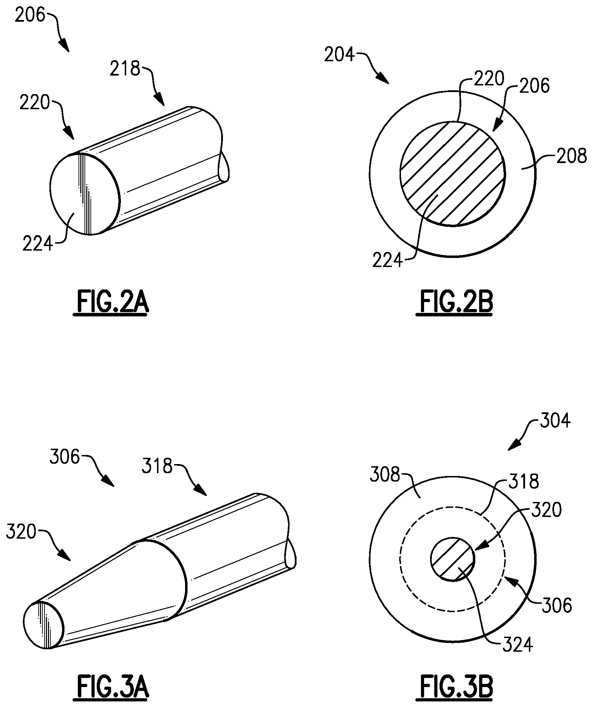

Figure 2A illustrates a perspective view of an electrode core 206 having an electrode core body 218 and electrode core tip 220 and Figure 2B is an isometric end view of an electrode 204 having the electrode core 206. The electrode core tip 220 has a generally circular end surface 224 and a generally cylindrical shape that does not taper along the length of the electrode core tip 220 such that a radius of the circular end surface 224 is approximately the same length as the radius of the circular cross-section of the electrode core body 218.

During the extrusion process where the flux-containing coating is formed around the electrode core, the density of a given portion of the coating can depend on the shape and structure of the underlying portion of the electrode core that the portion coating is formed on. In the embodiment shown in Figures 2A and 2B, the electrode core body 218 and the electrode core tip 220 have approximately the same shape and structure. Accordingly, the density of the coating 208 can be approximately constant along the length of the electrode 204 such that the density of a portion of the coating 208 that surrounds the electrode core tip 220 can be approximately equal to the density of a portion of the coating 208 that surrounds the electrode core body 218.

The uniform profile of the electrode core 206 means that the electrode 204 can be easily manufactured. However, electrode 204 can have poor arc-start characteristics because current density at the end surface 224 is not high enough to reliably and consistently initiate an arc. One way to increase the current density at the end surface is to reduce the area of the end surface by tapering the electrode core tip. Figure 3A illustrates a perspective view of an electrode core 306 that includes an electrode core tip 320 having tapered surfaces and Figure 3B is an isometric end view of an electrode 304 that comprises the electrode core 306. The electrode core tip 320 tapers inwards towards the centerline axis 322 along the length of the electrode core tip 320. In the embodiment illustrated in Figures 3A and 3B, the electrode core tip 320 tapers at an equal rate such that the end surface 324 is generally circular. Because of the tapered shaped, the cross-sectional area of the electrode core tip 320 decreases along the length of the electrode core tip 320 and the area of the end surface 324 is significantly less than a cross-sectional area of the electrode core body 318. With this structure, the current density at the end surface 324 is greater than the current density within the electrode core body 318. This increased current density makes it easier to establish an arc with the electrode 304 than it is with the electrode 204.

The tapered structure of the electrode core tip 320 can also affect the durability of the coating 308. The tapered structure means that there is a significant decrease in the volume electrode core at the electrode core tip 320. During the coating extrusion process, the coating material is provided at a relatively constant rate, meaning that approximately the same amount of the coating material is flown over the electrode core tip 320 as is flown over a section of the electrode core body 318 having the same length as the electrode core tip 320. Accordingly, the coating-to-metal ratio at the electrode core tip 320 is greater than the coating-to-metal ratio of the electrode core body 318. The increased coating-to-metal ratio at the electrode core tip 320 allows for more of the shielding gas to be generated at the start of welding, which reduces the porosity of the weld metal formed from the electrode core tip 320. The additional coating material also results in additional flux material mixing with the weld metal, which provides further protection to the weld metal and improves the quality of the weld metal formed from the electrode core tip 320.

While electrodes having a tapered electrode core tip can have better arc-start characteristics than electrodes having cylindrical electrode core tips, the tapered shape can also increase the fragility of the coating 308 at the tip. The tapered shape and smooth surfaces of the electrode core tip 320 means that the tapered electrode core tip 320 has significantly less surface area for the coating material to adhere to than the cylindrical electrode core tip 220 has, which can make it easier for the coating material to chip off. Electrodes having chipped off coating at the electrode core tip may have poor arc-start characteristics and may not even be usable for welding.

Accordingly, there is a need for a SMAW electrode having improved arc-start characteristics while having improved durability and manufacturability.

### Electrode Core Tips Having Surface Features for SMAW

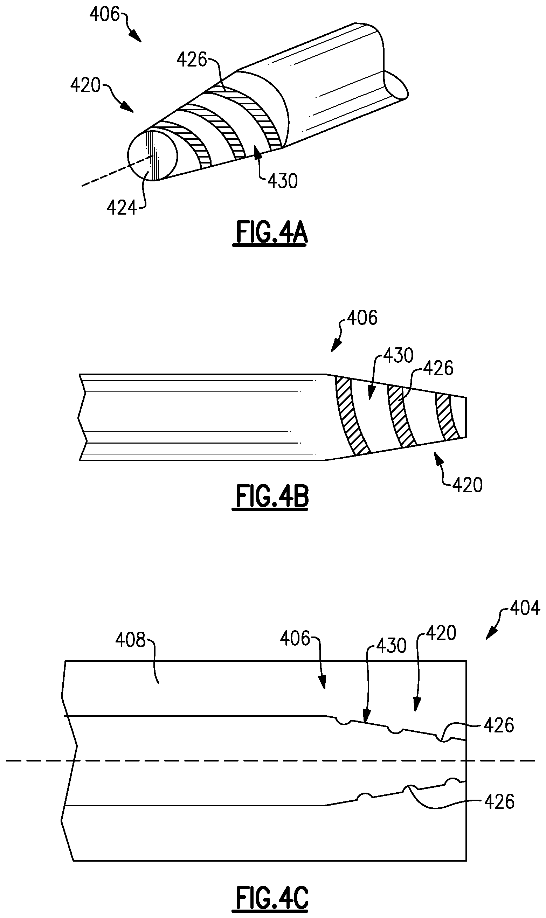

To improve the arc-start characteristics of the SMAW electrode while maintaining the durability of the flux coating and ease of manufacturing, the electrode core tip can have various surface features to increase the surface area for the coating to adhere to. Figure 4A illustrates a perspective view of an electrode core 406 that includes an electrode core tip 420 having a groove 426, Figure 4B is an isometric side view of the electrode core 406, and Figure 4C is a cross-sectional view of an electrode 404 having the electrode core 406. The groove 426, which is formed on the tapered surface 430 of the electrode core tip 420, extends around the electrode core tip 420 along the length of the electrode core tip 420 towards the end surface 424. In some embodiments, the groove 426 has a tapered helical shape. The groove 426 increases the surface area of the electrode core tip 420 such that the electrode core tip 420 has a higher surface area than the tapered electrode core tips that do not have any grooves or other surface features. With this arrangement, the coating 408 formed on the electrode core 402 can have improved durability compared to electrodes having electrode cores with tapered tips that do not have the groove 426. During the coating extrusion process, the coating material flows around the electrode core 402 and fills the groove 426. The coating material adheres to the tapered surface 430 of the electrode core 402, including the surfaces of the groove 426. The increased surface area of the electrode core tip 420 (compared to the surface area of the tapered electrode core tips that do not have surface features) means that more of the coating material directly contacts the electrode core tip 420, which results in the coating 408 being more strongly adhered to the electrode core tip 420, thereby improving the strength of the coating 408 and making it less prone to chipping.

In some embodiments, the groove 426 is formed using a machining process that uses one or more bits (e.g., milling bits) to remove portions of the electrode core 406 from the electrode core tip 420. In other embodiments, the groove 426 can be formed using a different process. In some embodiments, the groove 426 is formed in the electrode core tip 420 after the tapered shape of the electrode core tip 420 is formed. In other embodiments, the groove 426 and the tapered shape of the electrode core tip 420 can be formed in a single operation.

In the illustrated embodiment, the groove 426 forms a tapered helix along the length of the electrode core tip and is shaped such that the tapered helix makes approximately three complete turns along the length of the electrode core tip 420. In other embodiments, the groove 426 can be shaped such that it forms a tapered helix with a different number of complete turns along the length of the electrode core tip 420. For example, in some embodiments, the groove 426 can form a tapered helix that makes less than one complete turn, one to two complete turns, two to three complete turns, three to four complete turns, four to five complete turns, five or more complete turns, or a value in a range defined by any of these values. In general, the groove 426 can form a tapered helix having any suitable number of turns.

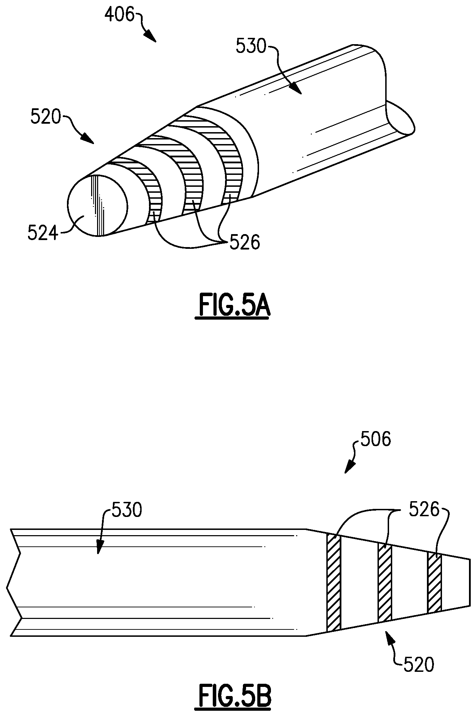

In the illustrated embodiment, the electrode core tip 420 has a single groove 426. In other embodiments, the electrode core tip can have multiple grooves. Figure 5A illustrates a perspective view of an electrode core 506 that includes an electrode core tip 520 having a tapered surface 530 and three grooves 526 formed thereon and Figure 5B is an isometric side view of the electrode core 506. Each of the grooves 526 has a generally circular shape and extends around the tapered electrode core tip 520. The tapered shape of the electrode core tip 520 means that the diameter of the circular grooves 520 varies with the length of the electrode core tip 520 such that grooves closer to the end surface 524 of the electrode core tip 520 have a smaller diameter than grooves further from the end surface 524.

In some embodiments, the grooves 526 are formed using a machining process that uses one or more bits (e.g., milling bits) to remove portions of the electrode core 506 from the electrode core tip 520. In other embodiments, the grooves 526 can be formed using a different process. In some embodiments, the grooves 526 are formed in the electrode core tip 520 after the tapered shape of the electrode core tip 520 is formed. In other embodiments, the groove 526 and the tapered shape of the electrode core tip 520 can be formed in a single operation.

The presence of the grooves 526 increase the surface area of the electrode core tip 520 such that the electrode core tip 520 has a higher surface area than the tapered electrode core tips that do not have any grooves or other surface features. As described above in connection with Figures 4A-4C, the increased surface area of the electrode core tip 520 means that there is more surface area for the coating to adhere to, which results in the coating being more strongly adhered to the electrode core tip 520, thereby improving the strength of the coating and making it less prone to chipping.

In the illustrated embodiment, the electrode core tip 520 has three grooves 526 and each of the grooves 526 has approximately the same width and depth. In other embodiments, however, the electrode core tip 520 can include a different number of grooves 526 and the depth and/or the width can vary between the grooves 526. For example, in some embodiments, the electrode core tip 520 includes one groove, two grooves, three grooves, four grooves, five grooves, more than five grooves, or a value in a range defined by any of these values. In embodiments where the electrode core tip 520 has more than one groove 526, the width and/or depth of one or more of the grooves can be different. Additionally, in some embodiments, the grooves 526 can be evenly spaced along the length of the electrode core tip 520 or can be unevenly spaced.

In the embodiments illustrated in Figures 4A-5B, the grooves are formed from a single, curved surface such that the grooves have curved shape. In other embodiments, however, the grooves can be formed from multiple surfaces. For example, in some embodiments, each of the grooves can be formed from two flat surfaces that intersect at the bottom of the groove. In some embodiments, the grooves can be formed from more than two surfaces. In embodiments of the electrode core tip that include more than one groove, each of the grooves can have the same shape or at least one of the multiple grooves can have a different shape.

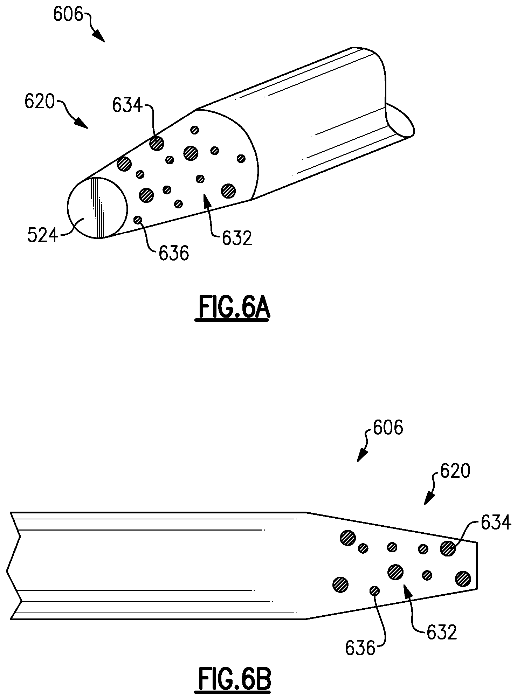

In the embodiments illustrated in Figures 4A-5B, the electrode core tips have grooves formed in the surface of the electrode core tips to increase the surface area of the electrode core tips to improve the adhesion between electrode core tip and the coating. In other embodiments, however, electrode core tips can have other types of surface features to increase the surface area. Figure 6A illustrates a perspective view of an electrode core 606 that includes an electrode core tip 620 having a roughened surface 632 that includes indentations 634 and protrusions 636. The indentations 634 and protrusions 636 are formed around the roughened surface 632 of the electrode core tip 620 and increase the surface area of the electrode core tip 620 such that the electrode core tip 620 has a higher surface area than the tapered electrode core tips that do not have a roughened surface 632. With this arrangement, the coating formed on the electrode core tip 620 can have improved durability compared to electrodes having electrode core tips that do not have the roughened surface 632. During the coating extrusion process, the coating material flows around the electrode core 602, at least partially filling the indentations 634 and at least partially covering the surrounding the protrusions 636. In some embodiments, the coating material completely fills the indentations 634 and/or completely covers the protrusions 636. The coating material adheres to the tapered surface 630 of the electrode core 402, including the surfaces of the indentations 634 and the protrusions 636 of the roughened surface 632. The increased surface area of the electrode core tip 620 (compared to the surface area of the tapered electrode core tips that do not have surface features) means that more of the coating material directly contacts the electrode core tip 620, which results in the coating being more strongly adhered to the electrode core tip 620, thereby improving the strength of the coating and making it less prone to chipping.

In some embodiments, the roughened surface 632 is formed using a machining process that uses one or more bits (e.g., milling bits) to remove portions of the electrode core 606 from the electrode core tip 620. In other embodiments, the roughened surface 632 can be formed using a different process. For example, in some embodiments, the roughened surface 632 can be formed using a grinding, sanding, or abrading process. In some embodiments, the indentations 634 and the protrusions 636 are formed using the same type of process. In other embodiments, the indentations 634 and protrusions 636 are formed using different types of processes. In some embodiments, the indentations 634 and protrusions 636 are formed in a single process such that the indentations 634 and protrusions 636 are formed at the same time. In other embodiments, the indentations 634 and protrusions 636 are formed at different times. In some embodiments, the roughened surface 632 is formed on the electrode core tip 620 after the tapered shape of the electrode core tip 620 is formed. In other embodiments, the roughened surface 632 and the tapered shape of the electrode core tip 620 can be formed in a single operation.

In the embodiment illustrated in Figures 6A and 6B, the roughened surface 632 includes approximately the same number of indentations 634 and protrusions 636. In other embodiments, however, the roughened surface 632 can include more indentations 634 than protrusions 636, more protrusions 636 than indentations 634, only indentations 634, or only protrusions 636. In general, the roughened surface 632 can have any suitable number of indentations 634 and suitable number of protrusions 636.

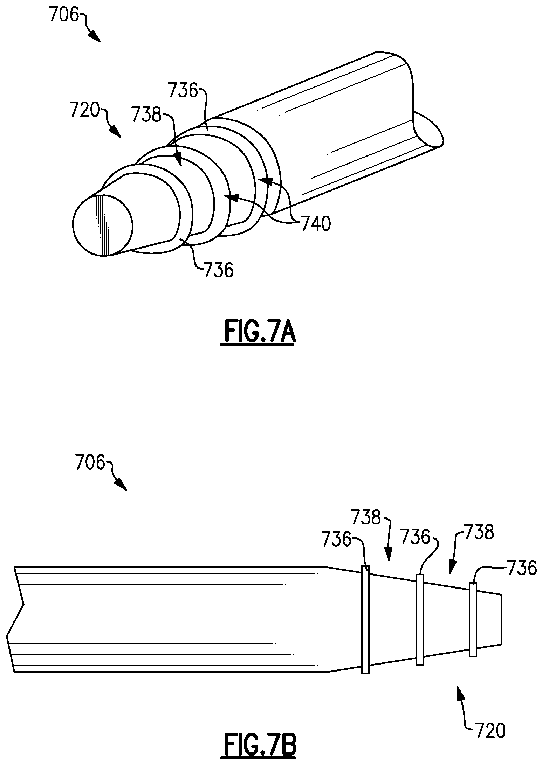

In the embodiment shown in Figures 6A and 6B, the protrusions 636 have a hemispherical shape. In other embodiments, however, the protrusions 636 can have a different shape. For example, in some embodiments, the protrusions 636 can have an irregular shape. Additionally, in some embodiments, the electrode core tip can have protrusions that extend around a circumference of the electrode core tip. For example, Figure 7A illustrates a perspective view of an electrode core 706 that includes an electrode core tip 720 having protrusions 736 that extend around a circumference of the electrode core tip 720 and Figure 7B is an isometric side view of the electrode core 706. The protrusions 736 are spaced apart from an adjacent protrusion 736 by openings 738 and each of the protrusions 736 are disc-shaped and have surfaces 740. Accordingly, the protrusions 736 increase the surface area of the electrode core tip 720 such that the electrode core tip 720 has a higher surface area than the tapered electrode core tips that do not have any grooves or other surface features.

With this arrangement, the coating formed on the electrode core tip 720 can have improved durability compared to electrodes having electrode core tips that do not have the protrusions 736. During the coating extrusion process, the coating material flows around the electrode core 706, filling the openings 738 and surrounding the protrusions 736. The coating material adheres to the electrode core 706, including the surfaces 740 of the protrusions 736. The increased surface area of the electrode core tip 720 (compared to the surface area of the tapered electrode core tips that do not have surface features) means that more of the coating material directly contacts the electrode core tip 720, which results in the coating being more strongly adhered to the electrode core tip 720, thereby improving the strength of the coating and making it less prone to chipping.

The protrusions 736 are formed from the same material as the rest of the electrode and, in some embodiments, are formed at the same time that the tapered shape of the electrode core tip 720 is formed. As described in greater detail elsewhere, the tapered shape of the electrode core tip 720 can be formed using a machining process that uses one or more bits (e.g., milling bits) to remove portions of the electrode core 706 from the electrode core tip 720. In these embodiments, the machining process can be configured so that, in addition to forming the tapered shape of the electrode core tip 720, the process also forms the protrusions 736. In other embodiments, however, the protrusions 736 and the tapered shape of the electrode core tip 720 can be formed using a different process. For example, in some embodiments, the a grinding, sanding, or abrading process can be used to form the protrusions 736 and the tapered shape of the electrode core tip 720.

In the illustrated embodiment, the electrode core tip 720 includes three protrusions 736. In other embodiments, however, the electrode core tip 720 can include a different number of protrusions 736. For example, in some embodiments, the electrode core tip 720 can include one protrusion, two protrusions, three protrusions, four protrusions, five protrusions, more than five protrusions, or a value in a range defined by any of these values. In embodiments where the electrode core tip 720 has more than one protrusions 736, the width and/or height of one or more of the protrusions can be different. Additionally, in some embodiments, the protrusions 736 can be evenly spaced along the length of the electrode core tip 720, such that each of the openings 738 have the same width. In other embodiments, the protrusions 736 can be unevenly spaced. In the illustrated embodiment, the protrusions 736 are disc-shaped such that the outer edge of the protrusions 736 is generally circular. In other embodiments, however, the protrusions 736 can have a different shape such that the outer edge of the protrusions 736 are non-circular. In general, the protrusions 736 can be any suitable shape. In the illustrated embodiment, the surfaces 740 of the protrusions 736 are generally planar. In other embodiments, however, the surfaces 740 can be non-planar (e.g., can be curved or textured).

### Electrode Core Tips Having Stepped Surface for SMAW

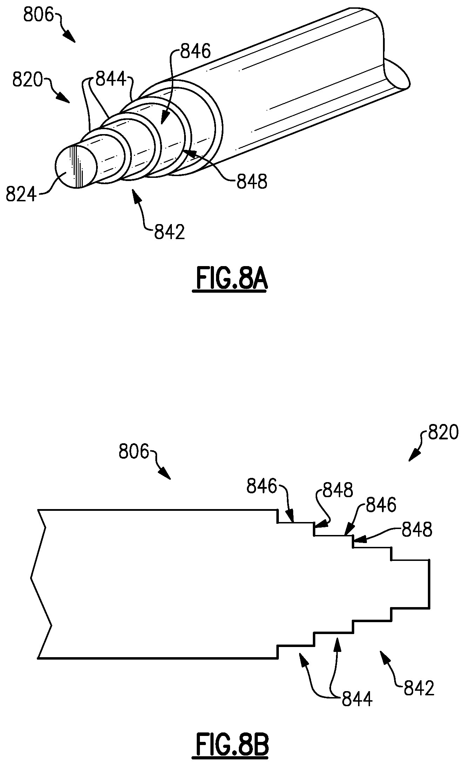

In the embodiments illustrated in Figures 4A-7B, the electrode core tips have tapered shapes that include one or more surface features to improve the arc-start characteristics of the electrode by increasing the current density at the end surface while providing additional surface area for the coating material to adhere to. In other embodiments, however, the electrode core tip can have a non-tapered shape without additional surface features while still having improved arc-start characteristics. Figure 8A illustrates a perspective view of an electrode core 806 that includes an electrode core tip 820 having a stepped surface 842 and Figure 8B is an isometric side view of the electrode core 806. The stepped surface 842 has multiple tiers 844 where each of the tiers 844 has a different size and the tiers 844 progressively decrease in size along the length of the electrode core tip 820 such that a tier 844 closer to the end surface 824 is smaller than a tier 844 that is further from the end surface. For example, in some embodiments, each of the tiers 844 is generally cylindrical and the circumference of each of the tiers 844 progressively decreases toward the end surface 824 such that the circumference of a tier 844 closer to the end surface 824 is smaller than the circumference of a tier 844 further from the end surface 824. With this arrangement, the cross-sectional area of the electrode core tip 820 decreases along the length of the electrode core tip 820, resulting in the current density at the end surface 824 being greater than the current density within the electrode core body 818.

The tiers 844 define horizontal surfaces 846 and vertical surfaces 848 of the stepped surface 842. During the coating extrusion process, the coating material flows around the electrode core 802 and adheres to the surface of the electrode core 802, including the horizontal and vertical surfaces 848 of the stepped surface 842. The horizontal surfaces 846 and vertical surfaces 848 increase the total surface area of the electrode core tip 820 (compared to the surface area of tapered electrode core tips that do not have surface features or a stepped surface, such as the electrode core tip 320 shown in Figure 3A), which means more of the coating material directly contacts the electrode core tip 820, which results in the coating being more strongly adhered to the electrode core tip 820 and improves the durability of the coating material.

In some embodiments, the stepped surface 842 is formed using a machining process that uses one or more bits (e.g., milling bits) to remove portions of the electrode core 806 from the electrode core tip 820. In other embodiments, the stepped surface 842 can be formed using a different process. In some embodiments, the tiers 844 are formed sequentially such that only tier is formed at a time. In other embodiments, one or more of the tiers 844 can be formed simultaneously. In some embodiments, all of the tiers 844 are formed at the same time.

In the illustrated embodiment, stepped surface 842 is formed such that vertical surfaces 848 are parallel to the end surface 824 and the horizontal surfaces 846 are perpendicular to the end surface 824. In these embodiments, the horizontal surfaces 846 can be perpendicular to an adjacent vertical surface 848. In other embodiments, however, the stepped surface 842 can be formed such that one or more of the horizontal surfaces 846 is not perpendicular to the end surface 824 and/or such that one or more of the vertical surfaces 848 is not parallel to the end surface 824. For example, in some embodiments, one or more of the horizontal surfaces 846 can taper inwards towards the centerline axis of the electrode core 806.

In the illustrated embodiment, each of the tiers 844 is generally cylindrical. In other embodiments, however, one or more of the tiers 844 can have a non-cylindrical shape. In general, the tiers 844 can have any suitable shape. In the illustrated embodiment, the stepped surface 842 includes four tiers 844 such that the stepped surface includes four horizontal surfaces 846 and four vertical surfaces 848. In other embodiments, the stepped surface 842 can include a different number of tiers 844 and a different number of horizontal surfaces 846 and vertical surfaces 848. For example, in some embodiments, the stepped surface 842 can include one tier, two tiers, three tiers, four tiers, five or more tiers, or a value in a range defined by any of these values, and the stepped surface can include a corresponding number of horizontal surfaces 846 and vertical surfaces 848. In general, the stepped surface 842 can have any suitable number of tiers 844, horizontal surfaces 846, and vertical surfaces 848.

In the illustrated embodiment, the stepped surface 842 is formed such that each of the horizontal surfaces 846 are approximately the same length and each of the vertical surfaces 848 are approximately the same height. In other embodiments, however, the stepped surface 842 can be formed such that at least one of the horizontal surfaces 846 has a different length than another horizontal surface 846 and/or at least one of the vertical surfaces 848 has a different height than another vertical surface 848. In general, the stepped surface 842 can be formed such that each of the horizontal surfaces 846 has any suitable length and the vertical surfaces 848 have any suitable height.

### Additional Examples

1. A welding electrode, comprising:
   an electrode core having an electrode core tip, wherein the electrode core tip comprises:
      an end surface;
      a tapered surface; and
      a groove formed in the tapered surface that extends around the electrode core tip; and
   a coating formed around the electrode core, wherein the coating is adhered to the tapered surface and at least partially fills the groove.
2. The welding electrode of example 1, wherein the coating is adhered to a surface of the groove.
3. The welding electrode of any previous example, wherein the groove has a tapered helical shape that extends along a length of the electrode core tip.
4. The welding electrode of any previous example, wherein the groove comprises a first groove and wherein the electrode core tip further comprises a second groove formed in the tapered surface and that extends around the electrode core tip.
5. The welding electrode of any previous example, wherein the second groove is closer to the end surface than the first groove.
6. The welding electrode of any previous example, wherein the coating comprises a flux material.
7. The welding electrode of any previous example, wherein a surface area of the electrode core tip is greater than the surface area of a reference electrode core tip that is the same as the electrode core tip except for the presence of the groove.
8. A welding electrode, comprising:
   an electrode core having an electrode core tip, wherein the electrode core tip comprises:
      an end surface;
      a tapered surface; and
      a protrusion formed on the tapered surface, wherein the protrusion extends away from the tapered surface; and
   a coating formed around the electrode core, wherein the coating is adhered to the tapered surface and at least partially covers the protrusion.
9. The welding electrode of any previous example, wherein the electrode core tip comprises a plurality of protrusions, wherein the plurality of protrusions includes the protrusion, and wherein the coating at least partially covers each of the plurality of protrusions.
10. The welding electrode of any previous example, wherein the electrode core tip comprises a plurality of indentations formed in the tapered surface, wherein the coating at least partially fills each of the plurality of indentations.
11. The welding electrode of any previous example, wherein the protrusion comprises a disc-shaped protrusion that extends around a circumference of the electrode core tip.
12. The welding electrode of any previous example, wherein the electrode core tip further comprises:
   a second disc-shaped protrusion, wherein the disc-shaped protrusion and the second disc-shaped protrusion are spaced apart from each other by an opening and wherein the coating at least partially fills the opening.
13. The welding electrode of any previous example, wherein the coating completely covers the protrusion.
14. The welding electrode of any previous example, wherein the coating is adhered to the protrusion.
15. The welding electrode of any previous example, wherein the coating comprises a flux material.
16. The welding electrode of any previous example, wherein a surface area of the electrode core tip is greater than the surface area of a reference electrode core tip that is the same as the electrode core tip except for the presence of the protrusion.
17. A welding electrode, comprising:
   an electrode core having an electrode core tip, wherein the electrode core tip comprises:
      an end surface;
      a tapered surface; and
      one or more surface features formed on the tapered surface, wherein a surface area of the electrode core tip is greater than the surface area of a reference electrode core tip that is the same as the electrode core tip except for the presence of the one or more surface features; and
   a coating formed around the electrode core, wherein the coating is adhered to the tapered surface and at least partially covers each of the one or more surface features.
18. The welding electrode of any previous example, wherein the coating comprises a flux material.
19. The welding electrode of any previous example, wherein the coating is adhered to each of the one or more surface features.
20. The welding electrode of any previous example, wherein the one or more surface features comprises a groove and wherein the coating at least partially fills the groove.
21. The welding electrode of any previous example, wherein the one or more surface features comprises a protrusion.
22. The welding electrode of any previous example, wherein the one or more surface features comprises an indentation and wherein the coating fills the indentation.
23. The welding electrode of any previous example, where the one or more surfaces comprises a second protrusion, wherein the protrusion and the second protrusion are spaced apart from each other by a gap, and wherein the coating at least partially fills the gap.
24. A welding electrode, comprising:
   an electrode core having an electrode core tip, wherein the electrode core tip comprises:
      an end surface;
      a first tier; and
      a second tier, wherein the first tier is closer to the end surface than the second tier and wherein the first tier is smaller than the second tier; and
   a coating formed around the electrode core, wherein the coating is adhered to and at least partially covers surfaces of the first and second tiers.
25. The welding electrode of any previous example, wherein the first and second tiers are each cylindrical and wherein a circumference of the first tier is less than a circumference of the second tier.
26. The welding electrode of any previous example, wherein the electrode core tip comprises one or more additional tiers and wherein the coating is adhered to and at least partially covers surfaces of the one or more additional tiers.
27. The welding electrode of any previous example, wherein the second tier comprises a first surface and a second surface that is adjacent to the first surface, and wherein the coating is adhered to and at least partially covers the first and second surfaces.
28. The welding electrode of any previous example, wherein the coating completely covers the first and second surfaces.
29. The welding electrode of any previous example, wherein the second surface is parallel to the end surface.
30. The welding electrode of any previous example, wherein the first surface is perpendicular to the end surface.
31. The welding electrode of any previous example, wherein the first tier comprises a third surface, wherein the third surface is parallel to the first surface and perpendicular to the end surface and the second surface.
32. The welding electrode of any previous example, wherein the coating comprises a flux material.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. Each of these blocks may be implemented in a variety of different ways. Any suitable combination of the elements and acts of the various embodiments described above can be combined to provide further embodiments. The various features and processes described above may be implemented independently of one another, or may be combined in various ways. All possible combinations and subcombinations of features of this disclosure are intended to fall within the scope of this disclosure.

## Claims

1. A welding electrode, comprising:
an electrode core having an electrode core tip, wherein the electrode core tip comprises:
an end surface (224, 424, 524, 824);
a tapered surface (430, 530, 630);
a coating (108, 208, 308, 408) formed around the electrode core; and at least one of
a groove (426, 526) formed in the tapered surface (430, 530, 630) that extends around the electrode core tip, wherein the coating (108, 208, 308, 408) is adhered to the tapered surface (430, 530, 630) and at least partially fills the groove (426, 526);
a protrusion (636, 736) formed on the tapered surface (430, 530, 630), wherein the protrusion (636, 736) extends away from the tapered surface (430, 530, 630), wherein the coating (108, 208, 308, 408) is adhered to the tapered surface (430, 530, 630) and at least partially covers the protrusion (636, 736); and
one or more surface features formed on the tapered surface (430, 530, 630), wherein a surface area of the electrode core tip is greater than the surface area of a reference electrode core tip that is the same as the electrode core tip except for the presence of the one or more surface features, wherein the coating (108, 208, 308, 408) is adhered to the tapered surface (430, 530, 630) and at least partially covers each of the one or more surface features.

2. The welding electrode of Claim 1, wherein the coating (108, 208, 308, 408) is adhered to a surface of the groove (426, 526).

3. The welding electrode of any preceding Claim, wherein the groove (426, 526) has a tapered helical shape that extends along a length of the electrode core tip.

4. The welding electrode of any preceding Claim, wherein the groove (426, 526) comprises a first groove (426, 526) and wherein the electrode core tip further comprises a second groove (426, 526) formed in the tapered surface (430, 530, 630) and that extends around the electrode core tip, and wherein the second groove (426, 526) is preferably closer to the end surface (224, 424, 524, 824) than the first groove (426, 526).

5. The welding electrode of any preceding Claim, wherein the coating (108, 208, 308, 408) comprises a flux material.

6. The welding electrode of any preceding Claim, wherein a surface area of the electrode core tip is greater than the surface area of a reference electrode core tip that is the same as the electrode core tip except for the presence of the groove (426, 526).

7. The welding electrode of any preceding Claim, wherein the electrode core tip comprises a plurality of protrusions (636, 736), wherein the plurality of protrusions (636, 736) includes the protrusion (636, 736), and wherein the coating (108, 208, 308, 408) at least partially covers each of the plurality of protrusions (636, 736).

8. The welding electrode of any preceding Claim, wherein the electrode core tip comprises a plurality of indentations formed in the tapered surface (430, 530, 630), wherein the coating (108, 208, 308, 408) at least partially fills each of the plurality of indentations.

9. The welding electrode of any preceding Claim, wherein the protrusion (636, 736) comprises a disc-shaped protrusion (636, 736) that extends around a circumference of the electrode core tip
, wherein the electrode core tip preferably further comprises:
a second disc-shaped protrusion (636, 736), wherein the disc-shaped protrusion (636, 736) and the second disc-shaped protrusion (636, 736) are spaced apart from each other by an opening and wherein the coating (108, 208, 308, 408) at least partially fills the opening.

10. The welding electrode of any preceding Claim, wherein the coating (108, 208, 308, 408) completely covers the protrusion (636, 736),
and/or wherein the coating (108, 208, 308, 408) is adhered to the protrusion (636, 736).

11. The welding electrode of any preceding Claim, wherein a surface area of the electrode core tip is greater than the surface area of a reference electrode core tip that is the same as the electrode core tip except for the presence of the protrusion (636, 736).

12. The welding electrode of any preceding Claim, wherein the coating (108, 208, 308, 408) is adhered to each of the one or more surface features.

13. The welding electrode of any preceding Claim, wherein the one or more surface features comprises a protrusion (636, 736).

14. The welding electrode of any preceding Claim, wherein the one or more surface features comprises an indentation and wherein the coating (108, 208, 308, 408) fills the indentation.

15. The welding electrode of any preceding Claim , where the one or more surfaces comprises a second protrusion (636, 736), wherein the protrusion (636, 736) and the second protrusion (636, 736) are spaced apart from each other by a gap, and wherein the coating at least partially fills the gap.
